# EUROPÄISCHE PATENTANMELDUNG

(11) **EP 2 944 513 A2**
(43) Veröffentlichungstag der Anmeldung: **18.11.2015**
(21) Anmeldenummer: 15167902.4
(22) Anmeldetag: 15.05.2015
(51) Int. Cl.: B60P 1/64

(54) **VERSCHIEBBARER ABROLLKIPPER**

(30) Priorität: 15.05.2014 DE 202014004060 U; 13.10.2014 DE 202014008127 U
(71) Anmelder: Valinski, Udo, 74080 Heilbronn (DE)
(72) Erfinder: Valinski, Udo, 74080 Heilbronn (DE)
(74) Vertreter: Groth, Wieland

(57) **Zusammenfassung**

Bekannte Abrollkipper weisen einen Ladearm mit feststehendem Hilfsrahmen (3) auf. Darüber hinaus sind am heckseitigen Ende lediglich zwei Führungsrollen (9) vorgesehen. Nachteilig bei den bekannten positionsfesten Abrollkippern (1) ist zum einen, dass beim Beund Entladen relativ kurze Hebelarme auftreten und somit die be- und entladene Last in ihrer Größe deutlich beschränkt ist. Darüber hinaus ist nachteilig, dass sowohl beim Beladen als auch beim Entladen steile Anfahrwinkel der Containermulde (6) auftreten und die Länge der Containermulden (6) durch die Länge des Abrollkippers selbst begrenzt ist. Die Last wird nachteiligerweise nur auf zwei Rollen verteilt.

Die Erfindung verringerte die Nachteile durch ein Fahrzeug (1) zum Transport einer Containermulde (6) mit einem Ladearm (4), der auf einem Hilfsrahmen (3) verschwenkbar angelenkt ist, wobei eine Verfahreinrichtung (27) für den Hilfsrahmen (3) vorgesehen ist, mit der der Hilfsrahmen (3) in einer Längsrichtung (L) des Fahrzeugs (1) zwischen einer Entladeposition und einer Transportposition hin und her verfahrbar ist. Darüber hinaus sind am heckseitigen Ende vier Führungsrollen (9) vorgesehen, die die Last der Containermudle (6) besser verteilen.

## Beschreibung

Die Erfindung betrifft ein Fahrzeug zum Transport einer Ladungsaufnahmeeinrichtung mit einem Ladearm, der auf einem Hilfsrahmen verschwenkbar angelenkt ist, sowie ein Verfahren zum Entladen einer Ladungsaufnahmeeinrichtung und ein Verfahren zum Beladen einer Ladungsaufnahmeeinrichtung.

Lastkraftwagen mit Ladearmen in Form von Abrollkippern sind im Stand der Technik bekannt, beispielsweise bietet der Hersteller *Palfinger* Abrollkipper für einen Lastkraftwagen mit einem positionsfest auf dem Lastkraftwagen angeordneten Hilfsrahmen an, an dem gelenkig ein zweigliedriger Abrollkipper angeordnet ist, mit dem Containermulden auf den Lastkraftwagen gezogen und von ihm herabgelassen werden können. Der Hilfsrahmen ist fest mit demChassis des Lastkraftwagens verschraubt. Abrollkipper sind auch von anderen Hersteller wie *Hiab, Marell* o. a. erhältlich und im Stand der Technik in vielfältigen Ausgestaltungsformen bekannt. Nachteilig bei den bekannten positionsfesten Abrollkippern ist zum einen, dass beim Be- und Entladen relativ kurze Hebelarme auftreten und somit die be- und entladene Last in ihrer Größe deutlich beschränkt ist. Darüber hinaus ist nachteilig, dass sowohl beim Beladen als auch beim Entladen steile Anfahrwinkel der Containermulde auftreten. Darüber hinaus ist es nachteilig, dass die Länge der Containermulden durch die Länge des Abrollkippers selbst begrenzt ist.

Es ist Aufgabe der vorliegenden Erfindung, ein Fahrzeug mit einem Ladearm zur Verfügung zu stellen, das die oben genannten Nachteile zumindest verringert.

Die Aufgabe wird durch ein eingangs genanntes Fahrzeug gelöst, das eine Verfahreinrichtung für den Hilfsrahmen aufweist, mit der der Hilfsrahmen in einer Längsrichtung des Fahrzeuges zwischen einer Entladeposition und einer Transportposition hin und her verfahrbar ist.

Zunächst ist hier der Begriff des Fahrzeuges weit auszulegen. Es kann sich dabei um einen Lastkraftwagen handeln, jedoch auch um einen Anhänger oder um einen Auflieger o. Ä.

Darüber hinaus ist der Begriff eines Ladearmes ebenfalls weit auszulegen. Bei einem Ladearm kann es sich um einen gelenkig auf einem Hilfsrahmen angeordneten Arm handeln, der einen starren Armabschnitt oder zwei oder auch mehrere gegeneinander gelenkig verbundene Armabschnitte umfassen kann. Der Ladearm kann an seinem freien Ende eine Öse, einen Haken oder ähnliche Befestigungsmittel aufweisen, mit der die Ladungsaufnahmeeinrichtung wie beispielsweise eine Containermulde am Ladearm befestigt werden kann. Der Ladearm kann teil eines herkömmlichen Abrollkippers oder Hakenliftes sein.

Erfindungswesentlich ist jedoch die Verfahrbarkeit des Hilfsrahmens entlang einer Längsrichtung des Fahrzeugs, wobei die Längsrichtung des Fahrzeugs der Fahrtrichtung des Fahrzeugs während des Betriebs entspricht. Der Hilfsrahmen ist dabei wenigstens um ein Viertel, vorzugsweise ein Drittel, vorzugsweise mehr als die Hälfte seiner Ausdehnung in Längsrichtung verfahrbar.

Vorteilhafterweise können bekannte Abrollkippersysteme oder auch Hakenliftsysteme unterschiedlicher Hersteller erfindungsgemäß modifiziert werden.

Die Verschiebbarkeit des Ladearmes hat mehrere Vorteile gegenüber positionsfesten Ladearmen. Zum einen können bei gleicher Ladearmlänge längere Chassis verwendet werden, um längere Ladungsaufnahmevorrichtungen zu transportieren. Des Weiteren ist der Anfahrwinkel beim Beladen und Entladen von Ladungsaufnahemeeinrichtungen deutlich flacher, und es können mit einem vergleichbar leistungsstarken Ladearm schwerere Ladungsaufnahmevorrichtunng angehoben werden, weil auftretende Hebelarme länger sind als im Stand der Technik.

Vorzugsweise ist an einem Chassis des Fahrzeugs ein Führungsrahmen positionsfest relativ zum Chassis montiert, und der Hilfsrahmen ist relativ beweglich zum Führungsrahmen ausgebildet. Der Führungsrahmen ist an dem Chassis des Fahrzeuges festgeschraubt und so ausgebildet, dass ein Hilfsrahmen auf ihm oder in ihm in Längsrichtung hin und her verfahren werden kann. Um den Hilfsrahmen hin und her verfahren zu können, ist eine Verfahreinrichtung vorgesehen, die ebenfalls weit auszulegen ist. Es kann sich dabei um einen oder mehrere hydraulisch oder pneumatisch angetriebene Zylinder handeln. Es ist jedoch auch denkbar, dass es sich um eine Seilzug- oder andere Zugvorrichtungen handelt, um eine Zahnstange die mit einem Ritzel zusammenwirkt oder Ähnliches.

Günstigerweise weist der Hilfsrahmen wenigstens zwei Längsträger auf, an deren erdbodenseitigen Seiten jeweils wenigstens zwei Laufmittel vorgesehen sind, die in ihnen zugeordneten Schienen des Führungsrahmen hin und her beweglich sind. Die Laufmittel können Rollen, Gleitplatten oder Ähnliches sein. Vorzugsweise sind pro Längsträger zwei, drei, vier oder eine beliebig höhere Anzahl an Laufmitteln vorgesehen. Je höher die Anzahl der Laufmittel, desto gleichmäßiger wird die Last des Hilfsrahmens auf den Führungsrahmen verteilt.

Die Schienen sind hier ebenfalls weit auszulegen. Es kann sich dabei um U-Profile handeln oder um U-Profile, deren freie Kanten nach innen abgewinkelt sind, oder es kann sich auch um T-Schienen handeln, auf denen Rollen mit Innen- oder Außenwulsten verfahrbar sind. Es sind auch andere Ausgestaltungen denkbar.

Vorzugsweise ist am heckseitigen Ende des Chassis seitlich jeweils eine Konsole vorgesehen mit jeweils einer innere und einer äußeren Führungsrolle.

Die vier Führungsrollen bilden eine Dreh- und Kippachse für die Ladungsaufnahmeeinrichtung beim Be- und Entladen aus. Vorzugsweise ist an jeder Seite des Chassis eine Konsole angeordnet mit jeweils eine Welle an der jeweils eine innere und eine äußere Führungsrolle drehbar angeordnet sind. Beim Be- und Entladen der Ladungsaufnahmeeinrichtung wird diese über die Heckseite des Fahrzeuges herabgelassen bzw. heraufgezogen. Der Kontakt mit dem Fahrzeug wird dabei über die Führungsrollen stattfinden, über die die Ladungsaufnahme-einrichtung rollen kann, ohne den Führungsrahmen zu beschädigen.

Vorzugsweise weist der Hilfsrahmen ebenfalls zwei Führungsrollen auf, die jedoch vom äußersten heckseitigen Ende des Hilfsrahmens ein Stück weit zum Fahrerhaus beabstandet sind. Der Abstand ist so gewählt, dass der Hilfsrahmen entgegen der Längsrichtung besonders weit zum heckseitigen Ende des Führungsrahmens verschoben werden kann, sodass die Führungsrollen des Führungsrahmens nicht mit den Führungsrollen des Hilfsrahmens kollidieren und die an den Konsolen angeordneten Führungsrollen die Position der nicht versetzten Führungsrollen des Hilfsrahmens einnehmen.

In einer besonders bevorzugten Ausführungsform der Erfindung sind die seitlichen Führungsrollen jeweils als Rollenwippe ausgebildet, die mehrere in Längsrichtung hintereinander angeordnete Rollen aufweist.

Vorzugsweise weist eine mittlere Rolle eine Drehachse auf, die einer Drehachse der Rollenwippe entspricht, und in Längsrichtung vor und hinter der mittleren Rolle ist eine gleiche Anzahl an weiteren Rollen vorgesehen, sodass die Rollenwippe in Längsrichtung symmetrisch ausgebildet ist und um die Längsachse der mittleren Rolle wippen kann. Es hat sich überraschend gezeigt, dass durch die Anordnung der Rollenwippe außen an jeweils einer der Konsolen unter Beibehaltung der einfachen inneren Führungsrollen, ein besonders störungsfreies Be- und Entladen, insbesondere langer Container und Containermulden, möglich ist.

Günstigerweise ist die Verfahreinrichtung an dem Hilfsrahmen und an dem Führungsrahmen montiert, wobei günstigerweise in der Ausbildungsform der Verfahreinrichtung als einem oder mehreren hydraulischen Zylindern die Zylinder mit dem Führungsrahmen und die Zylinderstange mit dem Querträger des Hilfsrahmens gelenkig verbunden sind.

Die Erfindung betrifft auch in ihrem zweiten Aspekt ein Verfahren zum Entladen einer Ladungsaufnahmeeinrichtung mit den Merkmalen des Anspruchs 10. Das Verfahren eignet sich insbesondere zur Durchführung mit einem der oben genannten Fahrzeuge, wobei eine Ladungsaufnahmeeinrichtung aus einer Transportposition mittels des verfahrbaren Hilfsrahmens über das heckseitige Ende eines Fahrzeugs verschoben wird und vorzugsweise erst dann ein am Hilfsrahmen angelenkter Ladearm aufgerichtet wird und die Ladungsaufnahmeeinrichtung angekippt wird. Die Ladungsaufnahmeeinrichtung wird anschließend durch Anwinkeln des Ladearmes vorzugsweise über die Führungsrollen auf den Erdboden abgelassen.

In einem dritten Aspekt wird die Aufgabe durch ein Verfahren zum Beladen einer Ladungsaufnahmeeinrichtung gelöst. Erfindungsgemäß wird die Ladungsaufnahmeeinrichtung mit dem Ladearm vom Erdboden angehoben, auf ein Fahrzeug hochgezogen und auf dem Fahrzeug auf den Hilfsrahmen vorzugsweise durch Verschwenken des Ladearmes abgesenkt, wobei der Hilfsrahmen abschließend in Längsrichtung in Richtung des Fahrerhauses des Fahrzeugs verfahren werden wird, bis die Ladungsaufnahmeeinrichtung vollständig über dem Fahrzeug angeordnet ist und in vorgesehene Arretiervorrichtungen auf dem Führungsrahmen vorzugsweise arretiert.

Die Erfindung wird anhand von Ausführungsbeispielen in sechzehn Figuren beschrieben, dabei zeigen:
- Fig. 1: einen Lastkraftwagen mit einem verschiebbaren Abrollkipper,
- Fig. 1b: Teilansicht der Fig. 1a,
- Fig. 2: Lastkraftwagen in Fig. 1 mit einer Entladeposition mit optimalem Abstand zwischen Containermulde und Lastkraftwagen,
- Fig. 3: Lastkraftwagen der Fig. 1 mit der Containermulde in der Entladeposition mit maximalem Abstand zum Lastkraftwagen,
- Fig. 4: eine Zwischenposition beim Beladen einer langen Containermulde mit dem erfindungsgemäßen verfahrbaren Abrollkipper und flachem Ladewinkel,
- Fig. 5a: herkömmlicher Hilfsrahmen eines herkömmlichen Abrollkippers mit an seinem heckseitigen Ende angeordneten Führungsrollen,
- Fig. 5b: erfindungsgemäß versetzte Führungsrollen am erfindungsgemäßen Hilfsrahmen,
- Fig. 5c: erfindungsgemäßer Hilfsrahmen der Fig. 5b einverfahrbar aufgesetzt in einen erfindungsgemäßen Führungsrahmen,
- Fig. 6: Heckseite des erfindungsgemäßen Führungsrahmens ohne den erfindungsgemäßen Hilfsrahmen sowie der Bodenseite einer Containermulde,
- Fig.: 7aSchnittansicht entlang der Linie VII in Fig. 4,
- Fig. 7b: Detailansicht in Fig. 7a,
- Fig. 8: Lastkraftwagen der Fig. 1 mit kurzer Containermulde zur Verwendung als Abrollkipper,
- Fig. 9: Lastkraftwagen in Fig. 8 mit abgekippter Containermulde,
- Fig. 10: Heck des Lastkraftwagens in einer weiteren Ausführungsform mit zwei Rollenwippen,
- Fig. 11: Rollenwippe in Fig. 10 in einer Seitenansicht,
- Fig. 12: Ansicht der rechten Konsole in Fig. 10.

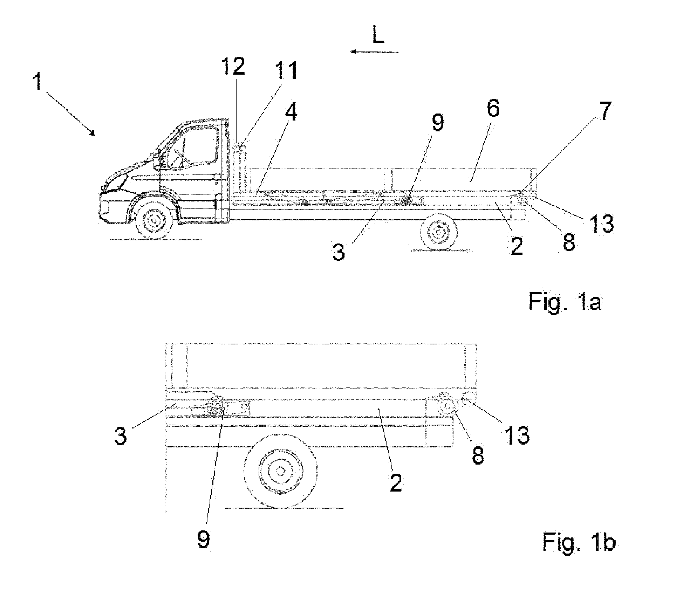

Fig. 1 a zeigt ein Fahrzeug in der speziellen Form eines Lastkraftwagens 1, auf dem ein erfindungsgemäßer Führungsrahmen 2 und ein erfindungsgemäßer entlang eines in einer Längsrichtung L des Führungsrahmens 2 verfahrbarer Hilfsrahmen 3 angeordnet ist. Auf dem Hilfsrahmen 3 ist ein verschwenkbarer Ladearm hier in Form eines Abrollkippers 4 vorgesehen. Fig. 1a zeigt den Lastkraftwagen 1 mit der Ladungsaufnahmeeinrichtung in Form einer Containermulde 6 in einer Transportposition. Am heckseitigen Ende ist die Containermulde 6 in dem Führungsrahmen 3 mithilfe einer Arretiereinrichtung 7 arretiert. Die Containermulde 6 liegt auf heckseitigen Führungsrollen 8 des Führungsrahmens 2 sowie auf Führungsrollen 9 des Hilfsrahmens 3 auf und ist über eine Öse 11 in einen Haken 12 eingehängt. Es können zusätzlich (nicht dargestellte) Auflageblöcke am Hilfsrahmen 3 vorgesehen sein, auf dem das führerhausseitige Ende der Containermulde 6 auf dem Hilfsrahmen 3 aufliegt.

Fig. 1b zeigt die Heckseite des in Fig. 1a dargestellten Lastkraftwagens 1. Die Containermulde 6 weist an ihrem heckseitigen Ende Rollen 13 auf, darüber hinaus liegt die Containermulde 6 auf den vier heckseitigen Führungsrollen 8 auf, die drehbar am Führungsrahmen 2 montiert sind. Die Containermulde 6 ist in der Arretiereinrichtung 7 in Form einer Aussparung in einer Nase des Führungsrahmens 2 während des Transportes arretiert.

Die Containermulde 6 liegt auch auf den erfindungsgemäß versetzt angeordneten Führungsrollen 9 des Hilfsrahmens 3 auf.

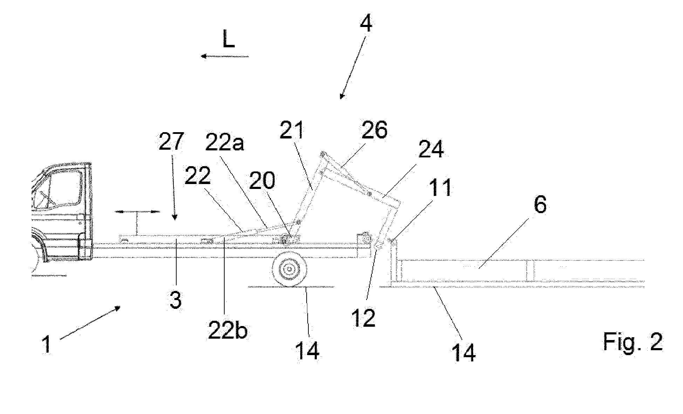

Fig. 2 zeigt die Anordnung der Fig. 1a in einer Entladeposition. Die Containermulde 6 liegt vollständig auf einem Erdboden 14 auf und der Haken 12 des Abrollkippers 4 ist aus der Öse 11 der Containermulde 6 gelöst. Der dargestellte Abrollkipper 4 ist in und entgegen der Längsrichtung L schwenkbar auf dem Hilfsrahmen 3 angeordnet, und der Abrollkipper 4 weist einen ersten und einen zweiten Armabschnitt 21, 24 auf, die gegeneinander verschwenkbar angeordnet sind. Ein erstes Gelenk 20, mit dem der erste Armabschnitt 21 am Hilfsrahmen 3 angelenkt ist, wird über einen ersten hydraulischen Zylinder 22 bewegt. Eine Zylinderstange 22a ist am ersten Armabschnitt 21 drehbar befestigt, während ein Zylinderkörper 22b am Hilfsrahmen 3 schwenkbar befestigt ist. Ein zweites Gelenk 23 zwischen dem ersten und dem zweiten Armabschnitt 21, 24 wird über einen zweiten Zylinder 26 hydraulisch betätigt. Der zweite Armabschnitt 24 weist den senkrecht abgewinkelten Haken 12 auf. Der Hilfsrahmen 3 des Abrollkippers 4 ist in Längsrichtung L hin und her verfahrbar, dafür sind eine, zwei oder eine beliebige höhere Anzahl an Verfahreinrichtungen 27 vorgesehen, die hier in Form eines nicht dargestellten ebenfalls hydraulischen Zylinders ausgebildet sind.

Fig. 2 zeigt die Containermulde 6 in einem zum Beladen optimalen Abstand zur Heckseite des Lastkraftwagens 1.

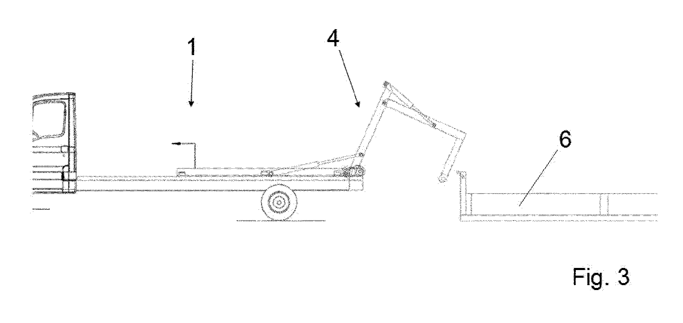

Fig. 3 zeigt im Gegensatz zur Fig. 2 die weiter vom heckseitigen Ende des Lastkraftwagens 1 entferntere entladene Containermulde 6. Auch in diesem größeren Abstand kann die Containermulde 6 mit dem erfindungsgemäßen Abrollkipper 4 problemlos beladen werden. Dazu wird der Abrollkipper 4 mit dem Hilfsrahmen 3 im Vergleich zu der Anordnung, die in Fig. 2 dargestellt ist, zum äußersten heckseitigen Ende des Lastkraftwagens 1 verfahren.

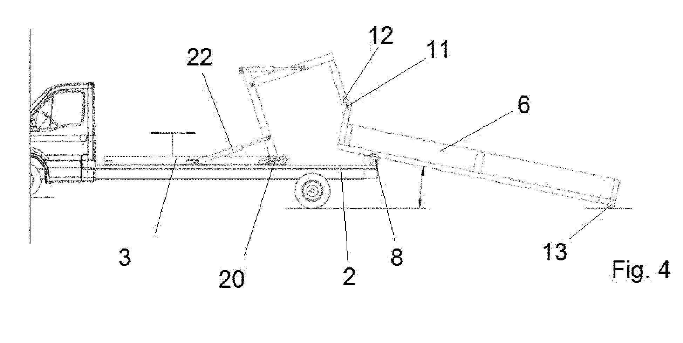

Fig. 4 zeigt eine Zwischenposition des Beladevorganges der in den Figuren 1, 2 und 3 dargestellten langen Containermulde 6 unabhängig davon, ob die Containermulde 6 ausgehend von einem optimalen oder einem maximalen Abstand beladen wird. Zunächst wird die Containermulde 6 mit der Öse 11 in den Haken 12 eingehakt und durch Verschwenken des Abrollkippers 4 um das erste Gelenk 20 angehoben. Durch Betätigen des oder der ersten hydraulischen Zylinder 22 wird die Cointainermulde 6 soweit angehoben, dass ihr wagenseitiges Ende oberhalb der heckseitigen Führungsrollen 8 des Führungsrahmens 2 angeordnet wird. Dann kann der Abrollkipper 4 mit dem Hilfsrahmen 3 in Längsrichtung L zu einem Führerhaus 40 verfahren werden, und dadurch kann die Containermulde 6 auf den heckseitigen Rollen 13 rollend über die Führungsrollen 8 des Führungsrahmens 2 gezogen werden. Diese Position ist in Fig. 4 dargestellt.

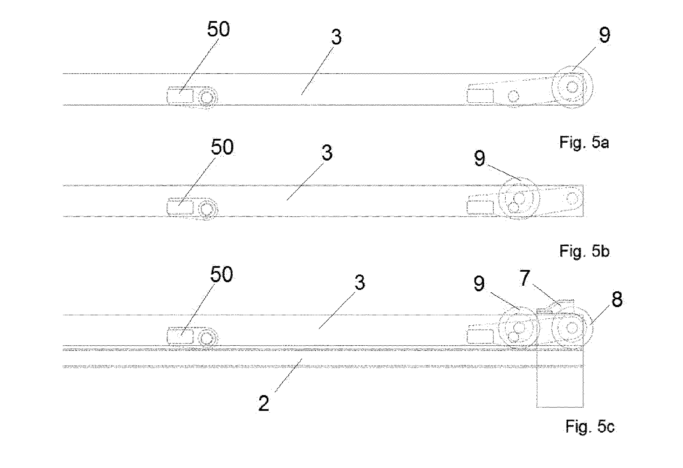

Fig. 5a zeigt den Hilfsrahmen 3 für einen herkömmlichen Abrollkipper 4. Der herkömmliche Hilfsrahmen 3 ist positionsfest relativ zu einem Chassis 60 des Lastkraftwagens 1 montiert. Der Hilfsrahmen 3 weist an seinem heckseitigen Ende zwei Führungsrollen 9 auf, über die die Containermulde 6 während des Entladens zum Erdboden 14 herabgelassen werden kann bzw. während des Beladens vom Erdboden 14 heraufgezogen werden kann. Während des Be- und Entladens ist die Containermulde 6 in Kontakt zu den Führungsrollen 9 und rollt über die Führungsrollen 9. In Fig. 5 ist auch ein Querträger gepunktet dargestellt.

Fig. 5b zeigt den herkömmlichen Hilfsrahmen 3 in der erfindungsgemäßen abgewandelten Form. Dabei werden die normalerweise zwei heckseitigen Führungsrollen 9 ein Stück weit beabstandet zum heckseitigen Ende des Hilfsrahmens 3 am Hilfsrahmen 3 montiert. Grundsätzlich könnte man die versetzten Führungsrollen 9 auch durch feststehende Auflagen für die Containermulde 6 ersetzen. Der in Fig. 5b dargestellte erfindungsgemäße Hilfsrahmen 3 wird auf den erfindungsgemäßen Führungsrahmen 2 gemäß Fig. 5c gesetzt. Der Hilfsrahmen 2 in Fig. 5c ist relativ positionsfest gegenüber dem Chassis 60 des Lastkraftwagens 1 montiert. Der Führungsrahmen 2 ist am Chassis festgeschraubt. Der Führungsrahmen 2 weist an seinem heckseitigen Ende zwei oder auch jede höhere Anzahl der Führungsrollen 8 auf. Die Führungsrollen 8 nehmen gleichsam die Position der Führungsrollen 9 des herkömmlichen Hilfsrahmens 3 gemäß Fig. 5a ein und ermöglichen es, beim Be- und Entladen die Containermulde 6 beim Entladen herabzulassen um beim Beladen heraufzuziehen. Sie bilden die Kippachse für die Containermulde 6.

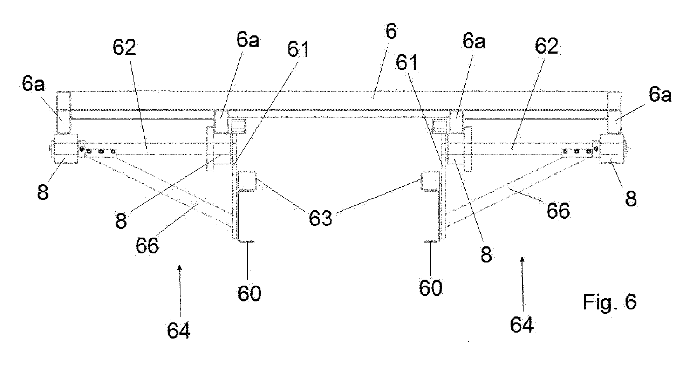

Fig. 6 zeigt einen Teil der Heckseite des erfindungsgemäßen Lastkraftwagens 1 mit einem Teil des Chassis 60 sowie auf dem Chassis 60 erfindungsgemäß zusätzlich montierten Schienen 63 des Führungsrahmens 2 in Form von an den Enden zueinander gewinkelten U-Profilen, in denen Rollen 70 des (nicht dargestellten) Hilfsrahmens 3 rollen. Am Chassis 60 und den Schienen 63 ist an jeder Seite jeweils eine Konsole 64 befestigt. Jede der Konsolen 64 weist eine Welle 62 und eine Wange 61 auf. Die Welle 62 ist über eine Querstrebe 66 abgestützt. An jeder der beiden Wellen 62 ist wangenseitig eine innere Führungsrolle 8 und außenseitig eine äußere Führungsrolle 8 drehbar montiert. Auf den Führungsrollen 8 liegen vier niedrig ausgebildete Längsträger 6a der Containermulde 6 auf. Vier Längsträger 6a rollen über die vier Führungsrollen 8 beim Be- und Entladen ab.

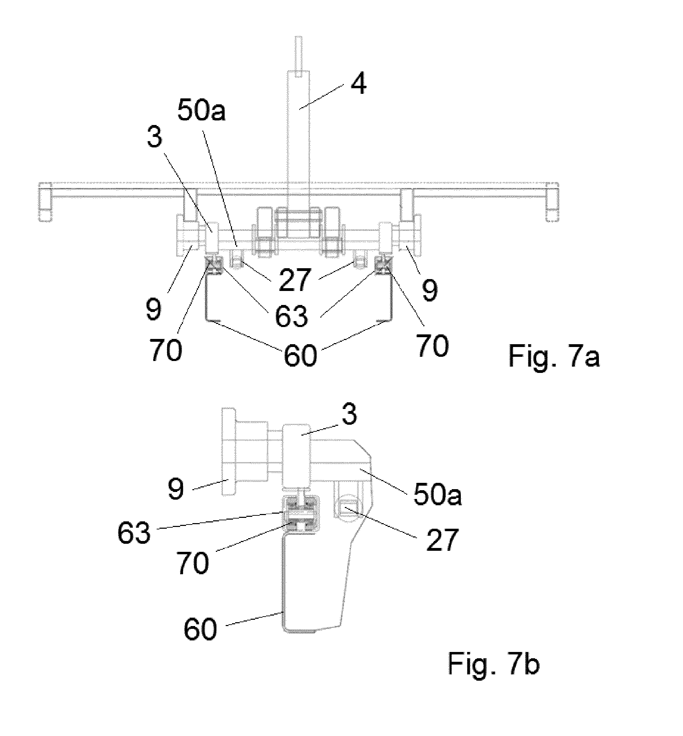

Fig. 7a zeigt eine Schnittansicht entlang der Linie VII-VII in Fig. 4. Dieser Schnitt ist nicht am heckseitigen Ende, sondern entlang der erfindungsgemäß versetzt angeordneten Führungsrollen 9 des Hilfsrahmens 3 dargestellt. In Fig. 7a ist wiederum ein Teil des Chassis 60 dargestellt mit zwei U-Profilschienen 63, die Teil des Führungsrahmens 2 sind. Auf dem Führungsrahmen 2 ist in Längsrichtung L hin und her beweglich der Hilfsrahmen 3 montiert. Der Hilfsrahmen 3 weist eine weitere Quertraverse 50a auf, in der im Bereich der Enden die beiden versetzt angeordneten Führungsrollen 9 drehbar befestigt sind. Am bodenseitigen Ende der weiteren Quertraverse 50a sind die beiden hydraulischen Zylinder der Verfahreinrichtung 27 angeordnet und schematisch dargestellt, mit denen der Hilfsrahmen 3 in den beiden Schienen 63 des Führungsrahmens 2 in Längsrichtung L hin und her verfahren werden kann. Fig. 7b zeigt einen Ausschnitt der Fig. 7a, gleiche Bezugszeichen bedeuten gleiche Bauteile.

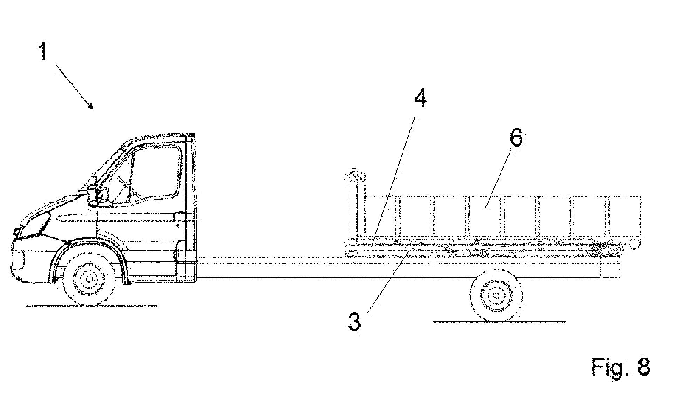

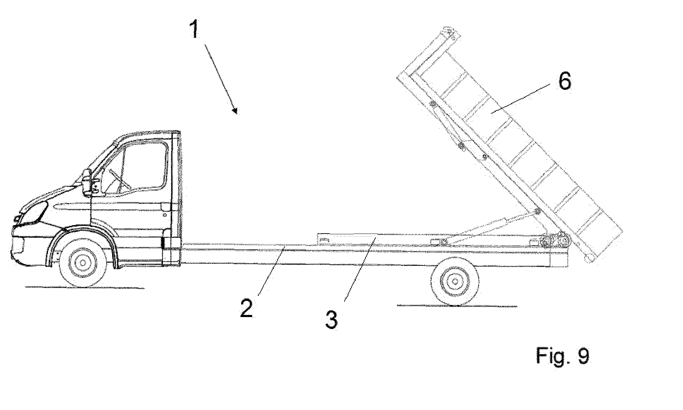

Fig. 8 zeigt eine modifizierte Anordnung in Fig. 1a. Der Lastkraftwagen 1 ist hier in einer Funktion als Abrollkipper dargestellt mit dem Hilfsrahmen 3 und dem Abrollkipper 4 entspricht dem in Fig. 1, jedoch ist eine kürzere Containermulde 6 in der Transportposition auf dem Lastkraftwagen 1 angeordnet. Diese Anordnung eignet sich im Vergleich zur Fig. 9 zur Verwendung als Abrollkipper. Gegenüber der Fig. 1 wird eine kürzere Containermulde 6 verwendet, damit beim Abkippen von Ladung in der Containermulde 6 ein steilerer Anstellwinkel erreicht werden kann, um ein Abkippen zu ermöglichen.

Fig. 9 zeigt den Lastkraftwagen 1 in Fig. 1 mit aufgerichteter Containermulde 6. In dieser in Fig. 9 dargestellten abgekippten Stellung kann Schüttgut oder Ähnliches aus der Containermulde auf den Erdboden abgekippt werden.

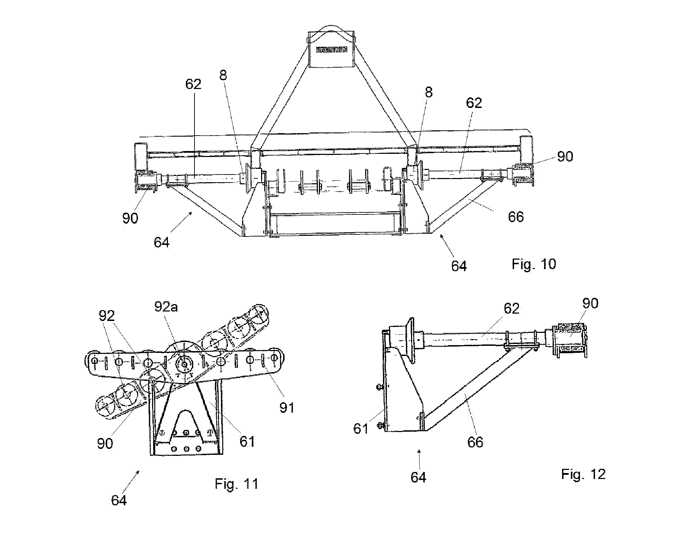

Fig. 10 zeigt eine weitere Ausführungsform der Konsolen 64 mit Welle 62 und Querstrebe 66, wobei jede der beiden Konsolen 64 wiederum eine innere Führungsrolle 8 aufweist und statt der äußeren Führungsrollen 8 jeweils eine am äußersten Ende jeder der beiden Wellen 62 angeordnete Rollenwippe 90.

Die Rollenwippe 90 ist in Fig. 11 in einer seitlichen Ansicht, und in Fig. 12 ist die rechte Konsole 64 nochmals als separates Bauteil dargestellt. Die Rollenwippe 90 weist zwei seitliche Stahlrahmen 91 auf, zwischen denen einzelne mit Bolzen geführte Rollen 92 drehbar angeordnet sind, bei denen günstigerweise ein mittlerer Bolzen mit einer mittleren Rolle 92a als Schwenkachse für die Rollenwippe 90 dient.

Fig. 11 zeigt die Rollenwippe 90 überlagert in einer horizontalen Stellung und in einer angewinkelten Stellung. Fig. 12 zeigt die Rollenwippe 90 in der horizontalen Stellung.

### Bezugszeichenliste

- 1: Lastrkraftwagen
- 2: Führungsrahmen
- 3: Hilfsrahmen
- 4: Abrollkipper

- 6: Containermulde
- 6a: Längsträger
- 7: Arretiereinrichtung
- 8: heckseitige Führungsrollen des Führungsrahmens
- 9: Führungsrollen des Hilfsrahmens

- 11: Öse
- 12: Haken
- 13: Rollen

- 20: erstes Gelenk
- 21: erster Armabschnitt
- 22: erster hydraulischer Zyliner
- 22a: Zylinderstange
- 22b: Zylinderkörper
- 23: zweites Gelenk
- 24: zweiter Armabschnitt
- 26: zweiter hydraulischer Zylinder
- 27: Verfahreinrichtung

- 60: Chassis

- 61: Wange
- 62: Welle
- 63: Schiene
- 64: Konsole

- 66: Querstrebe

- 70: Rollen

- 90: Rollenwippe
- 91: Stahlrahmen
- 92: Rollen
- 92a: mittlere Rolle

- L: Längsrichtung

## Patentansprüche

1. Fahrzeug zum Transport einer Ladungsaufnahmeeinrichtung (6) mit einem Ladearm (4), der auf einem Hilfsrahmen (3) verschwenkbar angelenkt ist
**gekennzeichnet durch** eine Verfahreinrichtung (27) für den Hilfsrahmen (3), mit der der Hilfsrahmen (3) in einer Längsrichtung (L) des Fahrzeugs (1) zwischen einer Entladeposition und einer Transportposition hin und her verfahrbar ist.

2. Fahrzeug nach Anspruch 1
**dadurch gekennzeichnet, dass** an einem Chassis (60) des Fahrzeugs (1) ein Führungsrahmen (2) positionsfest relativ zum Chassis (60) montiert ist und der Hilfsrahmen (3) relativ beweglich zum Führungsrahmen (2) ausgebildet ist.

3. Fahrzeug nach Anspruch 1 oder 2,
**dadurch gekennzeichnet, dass** der Hilfsrahmen (3) wenigstens zwei Längsträger aufweist, an deren erdbodenseitiger Seite jeweils wenigstens zwei Laufmittel (70) vorgesehen sind, die in zugeordneten Schienen (63) des Führungsrahmens (2) hin und her beweglich sind.

4. Fahrzeug nach Anspruch 1, 2 oder 3,
**dadurch gekennzeichnet, dass** der Führungsrahmen (2) an seinem heckseitigen Ende wenigstens zwei Führungsrollen (8) aufweist, die eine Kippachse für die Ladungsaufnahmeeinrichtung (6) beim Be- und Entladen ausbilden.

5. Fahrzeug nach Anspruch 4,
**dadurch gekennzeichnet, dass** am heckseitigen Ende des Chassis (6) seitlich jeweils eine Konsole (64) vorgesehen ist mit jeweils einer inneren und einer äußeren Führungsrolle (8).

6. Fahrzeug nach Anspruch 5,
**dadurch gekennzeichnet, dass** die äußeren Führungsrollen (8) als Rollenwippe (90) ausgebildet sind, die mehrere in Längsrichtung (L) hintereinander angeordnete Rollen (92) aufweist.

7. Fahrzeug nach Anspruch 6,
**dadurch gekennzeichnet, dass** eine mittlere Rolle (92a) eine Drehachse aufweist, die einer Drehachse der Rollenwippe (90) entspricht und in Längsrichtung (L) vor und hinter der mittleren Rolle (92a) eine gleiche Anzahl an weiteren Rollen (90) vorgesehen ist.

8. Fahrzeug nach einem der Ansprüche 1 bis 7,
**dadurch gekennzeichnet, dass** der Hilfsrahmen (3) von seinem heckseitigen Ende beabstandet zwei Führungsrollen (9) aufweist.

9. Fahrzeug nach einem der Ansprüche 1 bis 8,
**dadurch gekennzeichnet, dass** die Verfahreinrichtung (27) wenigstens einen hydraulischen Zylinder aufweist, der an dem Hilfsrahmen (3) und an dem Führungsrahmen (2) montiert ist.

10. Verfahren zum Entladen einer Ladungsaufnahmeeinrichtung, indem:
eine Ladungsaufnahmeeinrichtung (6) aus einer Transportposition mittels eines verfahrbaren Hilfsrahmens (3) über ein heckseitiges Ende eines Fahrzeugs (1) entgegen einer Längsrichtung (L) verschoben wird,
ein am verfahrbaren Hilfsrahmen (3) angelenkter Ladearm (4) aufgerichtet wird und die Ladungsaufnahmeeinrichtung (6) angekippt wird,
die Ladungsaufnahmeeinrichtung (6) mit ihrem heckseitigen Ende auf einen Erdboden (14) abgesenkt wird,
die Ladungsaufnahmeeinrichtung (6) mit dem Ladearm (4) vollständig auf den Erdboden (14) heruntergelassen wird.

11. Verfahren zum Beladen einer Ladungsaufnahmeeinrichtung, indem:
eine Ladungsaufnahmeeinrichtung (6) mit einer fahrzeugzugewandten Seite an einem Ladearm (4) befestigt wird,
die Ladungsaufnahmeeinrichtung (6) mit dem Ladearm (4) vom Erdboden (14) angehoben wird und auf ein Fahrzeug (1) hochgezogen wird und auf den Hilfsrahmen (3) abgesenkt wird und der Hilfsrahmen (3) in Längsrichtung (L) verfahren wird, bis die Ladungsaufnahmeeinrichtung (6) vollständig über dem Fahrzeug (1) angeordnet ist.

12. Verfahren nach Anspruch 10 oder 11,
**dadurch gekennzeichnet, dass** die Ladungsaufnahmeeinrichtung (6) über am heckseitigen Ende eines Führungsrahmens (2), der positionsfest am Chassis (60) montiert ist, drehbar angeordnete Führungsrollen (8) zum Erdboden (14) heruntergelassen oder vom Erdboden (14) heraufgezogen wird.
